# EUROPÄISCHE PATENTSCHRIFT

(11) **EP 2 476 196 B1**
(45) Veröffentlichungstag und Bekanntmachung des Hinweises auf die Patenterteilung: **31.10.2018**
(21) Anmeldenummer: 10734492.1
(22) Anmeldetag: 21.07.2010
(51) Int. Cl.: F02D 41/00, F02N 11/04, H02P 6/182, H02P 6/185

(54) **VERFAHREN ZUM BETREIBEN EINER ELEKTRISCHEN MASCHINE SOWIE ANTRIEBSVORRICHTUNG**
METHOD FOR THE OPERATION OF AN ELECTRIC MACHINE, AND DRIVING DEVICE
PROCÉDÉ PERMETTANT DE FAIRE FONCTIONNER UNE MACHINE ÉLECTRIQUE ET DISPOSITIF D'ENTRAÎNEMENT

(30) Priorität: 10.09.2009 DE 102009029327
(43) Veröffentlichungstag der Anmeldung: 18.07.2012
(73) Patentinhaber: Robert Bosch GmbH, 70442 Stuttgart (DE)
(72) Erfinder: RICHTER, Boyke, 76228 Karlsruhe (DE); HEIDRICH, Torsten, 71665 Vaihingen/Enz (DE)
(86) Internationale Anmeldenummer: PCT/EP2010/060564
(87) Internationale Veröffentlichungsnummer: WO 2011/029654

(56) Entgegenhaltungen:
- DE-A1- 10 221 385
- DE-A1- 10 303 392
- DE-A1- 10 333 969
- DE-A1-102004 004 078
- DE-A1-102007 009 568

## Beschreibung

Die Erfindung betrifft ein Verfahren zum Betreiben einer elektrischen Maschine einer Antriebsvorrichtung, wobei die elektrischen Maschine einen Rotor und einen Stator und die Antriebsvorrichtung ein Antriebsaggregat aufweisen. Die Erfindung betrifft weiter eine Antriebsvorrichtung.

### Stand der Technik

Verfahren der eingangs genannten Art sind aus dem Stand der Technik z.B aus der DE 10 2004 004078 bekannt.

Die elektrische Maschine wird beispielsweise in Form einer permanenterregten Synchronmaschine oder einer Drehstrom-Asynchronmaschine als Starter (Kurbelwellen-Startgenerator) für das Antriebsaggregat verwendet. Das Antriebsaggregat kann dabei eine Brennkraftmaschine eines Kraftfahrzeugs sein. Ein solcher Starter ist üblicherweise zwischen der Brennkraftmaschine und einem Getriebe der Antriebsvorrichtung vorgesehen. Zum Betreiben der elektrischen Maschine, sowohl in der Variante der permanenterregten Synchronmaschine als auch in der der Drehstrom-Asynchronmaschine, muss für eine definierte Momentenerzeugung die Lage beziehungsweise Winkelposition des Rotors gegenüber dem Stator bekannt sein. Zur Bestimmung der Winkelposition wird ein Lagesensor in der elektrischen Maschine vorgesehen. Alternativ kann die Winkelposition sensorlos aus in der elektrischen Maschine auftretenden Strömen und/oder aus Strangspannungen der elektrischen Maschine ermittelt werden. Die letztgenannte Vorgehensweise, also das sensorlose Verfahren, hat bei geringen Drehzahlen der elektrischen Maschine - die beispielsweise während eines Startens und Hochlaufens der elektrischen Maschine beziehungsweise des Antriebsaggregats auftreten - jedoch den Nachteil, dass das Drehmoment der elektrischen Maschine reduziert wird. Daher weist die elektrische Maschine üblicherweise mindestens einen Sensor für die Bestimmung der Winkelposition auf. Ein solcher Sensor benötigt jedoch einen nicht unerheblichen Einbauraum, obwohl der verfügbare Platz für eine Integration der elektrischen Maschine zwischen Brennkraftmaschine und einem Getriebe der Antriebsvorrichtung begrenzt ist. Zudem ist der Sensor kostenintensiv.

### Offenbarung der Erfindung

Gelöst wird die Aufgabe gemäß den unabhängigen Ansprüchen. Vorteilhafte Ausgestaltungen der Erfindung ergeben sich aus den abhängigen Ansprüchen. Das Verfahren zum Betreiben der elektrischen Maschine mit den in Anspruch 1 genannten Merkmalen weist den Vorteil auf, dass die zum Betreiben der elektrischen Maschine notwendige Bestimmung der Winkelposition des Rotors zu dem Stator vorgenommen werden kann, ohne dass die elektrische Maschine dazu den Sensor zur Bestimmung der Winkelposition aufweisen oder während des Betreibens bei einer Solldrehzahl der elektrischen Maschine das sensorlose Verfahren einsetzen muss. Dies wird erreicht, indem die Winkelposition des Rotors zu dem Stator anhand eines mittels eines dem Antriebsaggregat zugeordneten Gebers bzw. Sensors, insbesondere eines Drehwinkelgebers bestimmt wird. Die elektrische Maschine muss demzufolge keinen eigenen Sensor aufweisen. Dadurch lässt sich die elektrische Maschine deutlich kleiner aufbauen. Ebenso entfallen die Kosten für den Sensor. Das Antriebsaggregat weist den ihm zugeordneten Drehimpulsgeber ohnehin auf. Es ist daher sinnvoll, die von diesem erzeugten Signale zur Bestimmung der Winkelposition des Rotors zu verwenden. Dabei erzeugt der Drehwinkegeber üblicherweise zumindest ein Signal, welches zur Bestimmung eines Relativwinkels geeignet ist. In diesem Fall kann es notwendig sein, zunächst die absolute Winkelposition des Rotors zu dem Stator zu bestimmen, bevor ein weiterer Betrieb der elektrischen Maschine anhand der von dem Drehwinkelgeber gelieferten Daten erfolgen kann. Ist die absolute Winkelposition erst einmal bekannt, kann sie im Folgenden anhand des von dem Drehwinkelgeber erfassten Relativwinkels bestimmt werden. Bei einem Ausfall des Gebers, insbesondere Drehwinkelgebers können geeignete andere Verfahren zum Bestimmen der Winkelposition und damit zum Betreiben der elektrischen Maschine verwendet werden. Beispielsweise kann das Bestimmen der Winkelposition auch sensorlos erfolgen. Dieses sensorlose Bestimmen wird insbesondere bei Ausfall des Drehwinkelgebers angewandt, wobei es durch Auswerten von in der elektrischen Maschine induzierten Spannungen oder durch Aufbringen mindestens eines Stromimpulses auf eine Wicklung der elektrischen Maschine vorgesehen ist. Der Begriff "sensorlos" ist dabei derart auszulegen, dass kein Sensor zur Erfassung der Winkelposition beziehungsweise des Relativwinkels an der elektrischen Maschine vorgesehen ist. Während eines Normalbetriebs der elektrischen Maschine werden in dieser Spannungen induziert, die beispielsweise mittels eines Steuergeräts ausgewertet werden können. Aus diesen induzierten Spannungen kann die (absolute) Winkelposition des Rotors zu dem Stator bestimmt werden. Alternativ kann das sensorlose Bestimmen auch derart durchgeführt werden, dass auf die Wicklung des Antriebsaggregats, insbesondere des Stators des Antriebsaggregats, der mindestens eine Stromimpuls aufgebracht wird. Während eines solchen Aufbringens wird der elektrischen Maschine kein Drehmoment erzeugender Strom zugeführt. Daraus folgt, dass zum Bestimmen der Winkelposition des Rotors die elektrische Maschine zumindest kurzzeitig kein Drehmoment abgibt. Aus einer solchen Vorgehensweise resultiert daher ein Betreiben der elektrischen Maschine mit einem verringerten Drehmoment. Trotz der Verwendung des Drehwinkelgebers des Antriebsaggregats, welcher unter Umständen ausfallen kann, kann somit die elektrische Maschine mit hoher Robustheit betrieben werden, da bei dem Ausfall des Drehwinkelgebers die elektrische Maschine in einem Notbetrieb betrieben werden kann, wobei das Bestimmen der Winkelposition sensorlos erfolgt.

Weiterhin ist vorgesehen, dass zum Starten der elektrischen Maschine die Winkelposition des Rotors zu dem Stator zunächst mittels eines Aufbringens mindestens eines Stromimpulses auf eine Wicklung der elektrischen Maschine und anschließend anhand des mittels des Drehimpulsgebers erfassten Relativwinkels bestimmt wird. Das Starten der elektrischen Maschine erfolgt dabei vorzugsweise aus dem Stillstand der elektrischen Maschine heraus, jedoch stets in einem Zustand, in welchem der elektrischen Maschine kein Strom zum Erzeugen eines Drehmoments zugeführt wird. Vor, während oder nach dem Starten der elektrischen Maschine wird der Stromimpuls auf die Wicklung, insbesondere des Stators, der elektrischen Maschine aufgebracht. Eine solche Vorgehensweise ist in der DE 102 21 385 A1 beschrieben. Diese Vorgehensweise dient dazu, zunächst die absolute Winkelposition des Rotors zu bestimmen. Anschließend, also nach dem Starten - wenn die elektrische Maschine eine ausreichend hohe Drehzahl erreicht hat -, wird die Winkelposition anhand des Relativwinkels bestimmt, der mittels des Drehwinkelgebers des Antriebsaggregats bestimmt wird. Die Winkelposition bezeichnet dabei eine elektrische Winkelposition des Rotors. Nachdem die absolute Winkelposition des Rotors mittels des Aufbringens des Stromimpulses bestimmt ist, kann die elektrische Maschine in geeigneter Weise bestromt werden, sodass sie das gewünschte Drehmoment erzeugt, welches beispielsweise zum Starten des Antriebsaggregats verwendet wird.

Zur weiteren Bestimmung der Winkelposition wird der Drehwinkelgeber des Antriebsaggregats ausgewertet. Dabei wird die zuvor bestimmte Winkelposition jeweils um den erfassten Relativwinkel korrigiert. Ein solches Vorgehen hat den Vorteil, dass durch den Verzicht von Stromimpulsen nach der ersten Bestimmung der Winkelposition die elektrische Maschine ihr maximales Drehmoment zur Verfügung stellen kann, da sie nicht mit verringertem Drehmoment betrieben werden muss, was zum sensorlosen Bestimmen der Winkelposition notwendig wäre. Mit Vorteil wird das vorstehend beschriebene Verfahren derart angewandt, dass das Bestimmen der Winkelposition mittels des Stromimpulses im Stillstand der elektrischen Maschine erfolgt, während der Relativwinkel zum Korrigieren der Winkelposition verwendet wird, sobald die elektrische Maschine eine Drehzahl größer Null oder ein Drehmoment größer Null liefert. Bei einem Ausfall des Drehwinkelgebers kann zunächst die Winkelposition auf die beschriebene Art mittels des Stromimpulses bestimmt werden, anschließend - für höhere Drehzahlen der elektrischen Maschine - kann dann ein anderes sensorloses Verfahren zur Bestimmung der Winkelposition angewandt werden.

Ein solches Verfahren ist beispielsweise die Auswertung der induzierten Spannungen der elektrischen Maschine, welche eine permanenterregte Synchronmaschine sein kann, wie in der WO 2002/052714 A1 beschrieben. Somit lässt sich die Robustheit beziehungsweise die Betriebssicherheit der elektrischen Maschine erhöhen. Das Bestimmen der Winkelposition mittels des Stromimpulses erfolgt sehr schnell, da bereits nach einer Anzahl m Stromimpulsen beziehungsweise Teststromimpulsen bei einer m-phasigen oder m-strängigen Statorwicklung die Position des Rotors mit einer Genauigkeit von einem halben Winkelschritt, der 180°/m beträgt, erkannt wird. Eine solche Genauigkeit ist bereits für ein Anlaufen der elektrischen Maschine ausreichend. Bei einer dreiphasigen oder dreisträngigen Statorwicklung sind also insgesamt drei Stromimpulse ausreichend, um die Winkelposition des Rotors einem Winkelsektor von 60° zuordnen zu können. Ist die Winkelposition bestimmt, so kann mit einer, insbesondere geringen, Anzahl von weiteren Stromimpulsen die Genauigkeit der Winkelposition erhöht werden und somit das mögliche Drehmoment der elektrischen Maschine sowohl bei aktiver als auch bei passiver Last weiter gesteigert werden.

Eine Weiterbildung der Erfindung sieht vor, dass eine Mehrzahl von Stromimpulsen nacheinander so auf die elektrische Maschine aufgeschaltet wird, dass die Stromimpulse um Winkelschritte gegeneinander versetzte Statorflussvektoren erzeugen, dass bei jedem ausgeschalteten Stromimpuls die Phasenströme in zwei gleichsinnig durchflossenen Wicklungsphasen gemessen und miteinander verglichen werden und dass aus dem Vergleich ein Sektor von 180° für die Winkelposition bestimmt wird, der je nachdem, in welcher Wicklungsphase der größere oder kleinere Phasenstrom gemessen wird, sich an die Phasenlage des Statorflussvektors zu größeren oder kleineren Winkeln hin anschließt, das durch eine Schnittmenge der bestimmten 180°-Sektoren der Sektor für die Winkelposition auf die Größe eines Winkelschritts eingeschränkt wird, und dass eine Winkelposition der Symmetrieachse des Schnittmengen-Sektors als Rotorposition festgelegt wird. Ist die Winkelposition gemäß den vorstehenden Ausführungen bestimmt, so wird ein Stromimpuls auf die elektrische Maschine beziehungsweise deren Statorwicklung aufgeschaltet, der einen Drehmoment bildenden Statorflussvektor erzeugt. Die Phasenlage des Statorflussvektors ist beispielsweise um 90° in einer als Kraftrichtung gewählten Rotordrehrichtung gegenüber der zuvor bestimmten Winkelposition des Rotors versetzt. Nach einer Zeitspanne, die konstant sein kann oder auch in Abhängigkeit von der Drehzahl der elektrischen Maschine gewählt wird, wird zur Überprüfung der Winkelposition des Rotors mindestens ein weiterer Stromimpuls - vorzugsweise eine geringe Anzahl von Stromimpulsen - auf die Statorwicklung aufgeschaltet.

Hat sich die Winkelposition in Bezug auf die zuvor bestimmte nicht verändert, so wird erneut durch Aufschalten des Stromimpulses der Drehmoment bildende Statorflussvektor erzeugt. Erfolgt daraufhin ein Drehen des Rotors, also eine Veränderung der Winkelposition, so wird ein Stromimpuls derart auf die Statorwicklung aufgeschaltet, dass ein Drehmoment bildender Statorflussvektor generiert wird. Dessen Phasenlage soll wiederum um beispielsweise 90° gegenüber der neu bestimmten Winkelposition versetzt sein. Dieser Vorgang wird wiederholt, bis eine ausreichende Drehzahl der elektrischen Maschine vorliegt beziehungsweise erkannt wird. Danach wird auf die Bestimmung der Winkelposition anhand des mittels des Drehimpulsgebers erfassten Relativwinkels umgeschaltet. Damit entfallen die aufgebrachten Stromimpulse und die elektrische Maschine ist mit ihrem vollen Leistungsumfang beziehungsweise ihrem vollen Drehmoment nutzbar. Die Aufschaltung der Stromimpulse kann verschiedenartig durchgeführt werden. Vorzugsweise sind zu diesem Zweck Halbleiterschalter (beispielsweise in einer Zweiweg-Brückenschaltung verschaltete MOSFETs) vorgesehen.

Ist die Drehrichtung der elektrischen Maschine bekannt, so wird ein weiterer Stromimpuls derart aufgeschaltet, dass er einen Statorflussvektor erzeugt, dessen Phasenlage um einen halben Winkelschritt gegenüber der bestimmten Winkelposition in Kraftrichtung versetzt ist. Die Phasenströme der beiden gleichsinnig durch Strom durchflossenen Wicklungsphasen werden wiederum gemessen und miteinander verglichen. Aus dem Vergleich wird ein an die Phasenlage des erzeugten Statorflussvektors sich anschließender Sektor von 180° für eine neue Winkelposition bestimmt, der je nachdem, in welcher Wicklungslage der größere (oder kleinere) Phasenstrom gemessen wird, dem Statorflussvektor in Kraftrichtung vor- oder nacheilt. Die neue Winkelposition wird als die um einen halben Winkelschritt in Kraftrichtung versetzte Phasenlage des Statorflussvektors bestimmt, wenn der 180°-Sektor vorauseilt und als die um einen halben Winkelschritt gegen Kraftrichtung versetzte Phasenlage des Stromflussvektors bestimmt, wenn der 180°-Sektor nacheilt. Die Aufschaltung des weiteren Stromimpulses zur Drehmomenterzeugung auf die Wicklung der elektrischen Maschine beziehungsweise auf die Statorwicklung wird so vorgenommen, dass die Phasenlage des von ihm erzeugten Drehmoment bildenden Statorflussvektors um 90° elektrisch gegenüber der neu bestimmten Rotorposition in Kraftrichtung versetzt ist.

Ist die Drehrichtung dagegen unbekannt, so wird die Aufschaltung des mindestens einen weiteren Stromimpulses so vorgenommen, dass ein erster der weiteren Stromimpulse einen ersten Statorflussvektor erzeugt, dessen Phasenlage gegenüber der zuvor bestimmten Winkelposition um einen halben Winkelschritt entgegen Kraftrichtung versetzt ist. Die Phasenströme der beiden gleichsinnig durch Strom durchflossenen Wicklungsphasen werden wiederum gemessen und miteinander verglichen und aus dem Vergleich wird ein an die Phasenlage des erzeugten Stromflussvektors sich anschließender Sektor von 180° für eine neue Winkelposition bestimmt, der je nachdem, in welcher Wicklungsphase der größere (oder kleinere) Phasenstrom gemessen wird, dem Statorflussvektor in Kraftrichtung vor- oder nacheilt.

Im Falle des Nacheilens des 180°-Sektors wird die neue Winkelposition als die um einen halben Winkelschritt gegen Kraftrichtung versetzte Phasenlage des erzeugten Stromflussvektors bestimmt und die Aufschaltung des weiteren Stromimpulses zur Drehmomenterzeugung auf die Statorwicklung so vorgenommen, dass die Phasenlage des von ihm erzeugten, Drehmoment bildenden Statorflussvektors um 90° gegenüber der neuen Winkelposition in Kraftrichtung versetzt ist. Im Falle des Voreilens des 180°-Sektors wird ein zweiter der weiteren Stromimpulse auf die Wicklung aufgeschaltet, der einen um einen Winkelschritt gegenüber der Phasenlage des von dem ersten der weiteren Stromimpulse erzeugten ersten Statorflussvektors versetzten zweiten Statorflussvektor erzeugt. Die Phasenströme der beiden gleichsinnig stromdurchflossenen Wicklungsphasen werden wiederum gemessen und miteinander verglichen, und aus dem Vergleich ein an die Phasenlage des von dem zweiten der weiteren Stromimpulse erzeugten zweiten Statorflussvektors sich anschließender Sektor von 180° für eine neue Winkelposition bestimmt.

Die neue Winkelposition wird als die um einen halben Winkelschritt gegen Kraftrichtung versetzte Phasenlage des von dem zweiten der weiteren Stromimpulse erzeugten zweiten Statorflussvektors festgelegt, wenn der 180°-Sektor nacheilt, und als um einen halben Winkelschritt in Kraftrichtung versetzte Phasenlage des von dem zweiten der Stromimpulse erzeugten zweiten Statorflussvektors festgelegt, wenn der 180°-Sektor voreilt. Die Aufschaltung des weiteren Stromimpulses zur Drehmomenterzeugung auf die Wicklung wird derart vorgenommen, dass die Phasenlage des von ihm erzeugten, Drehmoment bildenden Statorflussvektors um 90° in Kraftrichtung gegenüber der Winkelposition versetzt ist.

Eine Weiterbildung der Erfindung sieht vor, dass der Geber bzw. Drehwinkelgeber für zumindest eine Winkelposition eine Absolutwinkelposition erfasst und mit dieser die Winkelposition des Rotors korrigiert wird. Der Drehwinkelgeber ist also derart ausgebildet, dass er in zumindest einer Winkelposition die Absolutwinkelposition bestimmen kann. Dies ist beispielsweise der Fall, wenn der Drehwinkelgeber ein Geberrad umfasst. Dieses weist beispielsweise 60 Winkelschritte bzw.

Markierungen auf, die durch Zähne gekennzeichnet sind. An zwei dieser Winkelpositionen sind keine Zähne vorgesehen. Diese beiden fehlenden Zähne des Geberrades mit damit 60-2 Zähnen können zur Bestimmung der Absolutwinkelposition und damit auch zur Korrektur der Winkelposition des Rotors herangezogen werden.

Die Erfindung umfasst weiterhin eine Antriebsvorrichtung entsprechend Anspruch 4, welche.

Eine Weiterbildung der Erfindung sieht vor, dass das Antriebsaggregat eine Brennkraftmaschine ist. Die elektrische Maschine dient dabei als Starter der Brennkraftmaschine, ist also beispielsweise als Kurbelwellen-Startgenerator ausgelegt, der sowohl als Anlasser als auch als Generator dient.

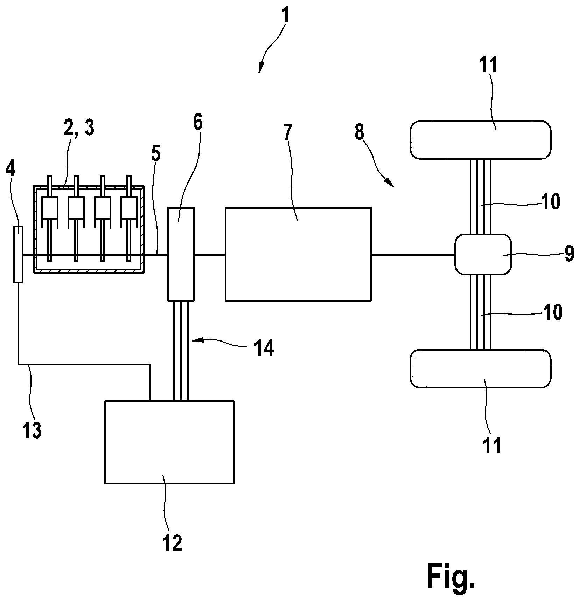

Eine Weiterbildung der Erfindung sieht vor, dass der Drehwinkelgeber ein Geberrad mit zugeordetem Aufnehmer ist. Das Geberrad ist dem Antriebsaggregat zugeordnet und dazu ausgelegt, Signale abzugeben, welche jeweils das Zurücklegen eines bestimmten Winkelschritts signalisieren. Beispielsweise kann das Geberrad in sechzig Winkelpositionen unterteilt sein, wobei diese Winkelpositionen durch Zähne gekennzeichnet sind, die mittels einer geeigneten Einrichtung, z.B. eines Sensors erfasst werden können. An zwei der Winkelpositionen sind keine Zähne vorgesehen. Wird also das Fehlen der Zähne festgestellt, so kann der Drehimpulsgeber beziehungsweise das Geberrad nicht nur einen Relativwinkel, sondern eine Absolutwinkelposition erfassen. Mit letzterer kann die Winkelposition der elektrischen Maschine korrigiert werden. Die Erfindung wird nachfolgend anhand der in der Zeichnung dargestellten Ausführungsbeispiele näher beschrieben. Dabei zeigt die einzige Figur eine schematische Darstellung einer Antriebsvorrichtung.

Die Figur zeigt eine schematische Darstellung einer Antriebsvorrichtung 1, die beispielsweise einem Kraftfahrzeug (nicht dargestellt) zugeordnet ist. Die Antriebsvorrichtung 1 weist ein Antriebsaggregat 2 auf, welches als Brennkraftmaschine 3 ausgebildet ist. Die Brennkraftmaschine 3 verfügt über einen Geber, insbesondere Drehwinkelgeber 4, welcher als Geberrad ausgebildet ist, insbesondere mit zugeordnetem Aufnehmer oder Sensor. Der Drehwinkelgeber 4 ist derart an die Brennkraftmaschine 3 gekoppelt, dass bei einem Betrieb der Brennkraftmaschine 3 eine Drehung eines Kurbeltriebs 5 der Brennkraftmaschine 3 festgestellt werden kann. Aus dem Ausgangssignal des Drehwinkelgebers kann in bekannter Weise die Drehzahl des Geberrades ermittelt werden, Der Drehwinkelgeber 4 kann daher auch als Drehzahlsensor bezeichnet werden.

In der Antriebsvorrichtung 1 ist auch eine mit der Brennkraftmaschine 3 zusammenwirkende elektrische Maschine 6 vorgesehen. Diese dient als Starter-Generator, insbesondere als Kurbelwellen-Startgenerator, welcher sowohl als Anlasser als auch als Generator betrieben werden kann. Die elektrische Maschine 6 ist ebenso wie der Drehwinkelgeber 4 mit dem Kurbeltrieb 5 der Brennkraftmaschine 3 gekoppelt. Ebenso an dem Kurbeltrieb 5 gekoppelt ist ein Getriebe 7, welches auch beispielsweise eine Anfahrkupplung umfassen kann. Nachfolgend des Getriebes 7 ist ein Antriebsstrang 8 des Kraftfahrzeugs an dieses angeschlossen, wobei der Antriebsstrang 8 über ein Differential 9 verfügt, über welches Achsen 10 des Kraftfahrzeugs zu dessen Rädern 11 angeschlossen sind.

Die Antriebsvorrichtung 1 weist zusätzlich ein Steuergerät 12 auf. Dieses dient der Ansteuerung der elektrischen Maschine 6, kann aber auch zusätzliche Aufgaben, wie beispielsweise das Ansteuern der Brennkraftmaschine 3, übernehmen. Das Steuergerät 12 ist mit dem Drehwinkelgeber 4 verbunden, sodass von dem Drehwinkelgeber abgegebene Signale an das Steuergerät 12 weitergeleitet werden. Zu diesem Zweck ist eine Leitung 13 vorgesehen. Die Signale werden von dem Drehwinkelgeber 4 dann abgegeben, wenn eine Drehung des Kurbeltriebs um einen bestimmten Drehwinkel festgestellt wird. Mittels des Drehwinkelgebers 4 werden also Relativwinkel des Kurbeltriebs 5 bestimmt. Das Steuergerät 12 ist über einen dreiphasigen Anschluss 14 mit der elektrischen Maschine 6 verbunden. Über jede der drei Phasen des Anschlusses 14 kann mindestens eine Wicklung der elektrischen Maschine 6 mit einem Stromimpuls beaufschlagt werden.

Bei einem Betreiben der Antriebsvorrichtung 1 beziehungsweise der elektrischen Maschine 6 kann, durch die Kopplung von Drehimpulsgeber 4, Brennkraftmaschine 3 und elektrischer Maschine 6 über den Kurbeltrieb 5, auch ein Relativwinkel einer Drehung der elektrischen Maschine 6 erfasst werden. Da es notwendig ist, die Winkelposition eines Rotors zu einem Stator der elektrischen Maschine 6 zu kennen, um diese betreiben zu können, wird das Signal des Drehimpulsgebers 4 dazu verwendet, diese Winkelposition zu bestimmen. Auf diese Weise muss an der elektrischen Maschine 6 kein eigener Sensor zur Bestimmung der Winkelposition des Rotors zu dem Stator vorgesehen werden. Die elektrische Maschine 6 kann damit kleiner und kostengünstiger gebaut werden.

## Patentansprüche

1. Verfahren zum Betreiben einer elektrischen Maschine (6) einer Antriebsvorrichtung (1), wobei die elektrische Maschine (6) einen Rotor und einen Stator und die Antriebsvorrichtung (1) ein mit der elektrischen Maschine zusammenwirkendes Antriebsaggregat (2) aufweisen, wobei eine Winkelposition des Rotors zu dem Stator anhand eines mittels eines dem Antriebsaggregat (2) zugeordneten Gebers, insbesondere Drehwinkelgebers (4), bestimmt wird, wobei der Geber und die elektrische Maschine an das Antriebsaggregat gekoppelt sind und wobei eine der Ansteuerung der elektrischen Maschine dienende Steuervorrichtung (12) vorgesehen ist, die mit dem Geber verbunden ist,
**dadurch gekennzeichnet, dass**
die Winkelposition des Rotors zu dem Stator zum Starten der elektrischen Maschine (6) zunächst mittels eines Aufbringens mindestens eines Stromimpulses auf eine Wicklung der elektrischen Maschine (6) und anschließend anhand des mittels des Gebers, insbesondere Drehwinkelgebers (4), erfassten Relativwinkels in der Steuervorrichtung (12) bestimmt wird.

2. Verfahren nach Anspruch 1, **dadurch gekennzeichnet, dass** eine Mehrzahl von Stromimpulsen nacheinander so auf die elektrische Maschine (6) aufgeschaltet wird, dass die Stromimpulse um Winkelschritte gegeneinander versetzte Statorflussvektoren erzeugen, dass bei jedem aufgeschalteten Stromimpuls Phasenströme in zwei gleichsinnig durchflossenen Wicklungsphasen gemessen und miteinander verglichen werden und dass aus dem Vergleich ein Sektor von 180° für die Winkelposition bestimmt wird, der je nachdem, in welcher Wicklungsphase der größere oder kleinere Phasenstrom gemessen wird, sich an die Phasenlage des Statorflussvektors zu größeren oder kleineren Winkeln hin anschließt, dass durch eine Schnittmenge der bestimmten 180°-Sektoren der Sektor für die Winkelposition auf die Größe eines Winkelschritts eingeschränkt wird und dass eine Winkelposition der Symmetrieachse des Schnittmengen-Sektors als Rotorposition festgelegt wird.

3. Verfahren nach einem der vorhergehenden Ansprüche, **dadurch gekennzeichnet, dass** der Drehwinkelgeber (4) für zumindest eine Winkelposition eine Absolutwinkelposition erfasst und mit dieser die Winkelposition des Rotors korrigiert wird.

4. Antriebsvorrichtung (1) mit einer elektrischen Maschine (6), die einen Rotor und einen Stator aufweist, und mit einem mit der elektrischen Maschine zusammenwirkenden Antriebsaggregat (2), wobei eine Winkelposition des Rotors zu dem Stator anhand eines mittels eines dem Antriebsaggregat (2) zugeordneten Gebers, insbesondere Drehwinkelgebers (4), bestimmt wird, wobei der Geber und die elektrische Maschine an das Antriebsaggregat gekoppelt sind und wobei eine der Ansteuerung der elektrischen Maschine dienende Steuervorrichtung (12) vorgesehen ist, die mit dem Geber verbunden ist,
**dadurch gekennzeichnet, dass** die Winkelposition des Rotors zu dem Stator zum Starten der elektrischen Maschine (6) zunächst mittels eines Aufbringens mindestens eines Stromimpulses auf eine Wicklung der elektrischen Maschine (6) und anschließend anhand des mittels des Gebers, insbesondere Drehwinkelgebers (4), erfassten Relativwinkels in der Steuervorrichtung (12) bestimmbar ist.

5. Antriebsvorrichtung (1) nach Anspruch 4, **dadurch gekennzeichnet, dass** das Antriebsaggregat (2) eine Brennkraftmaschine (3) ist.

6. Antriebsvorrichtung (1) nach einem der Ansprüche 4 und 5, **dadurch gekennzeichnet, dass** der Drehwinkelgeber (4) ein Geberrad ist.

## Claims

1. Method for operating an electric machine (6) of a drive apparatus (1), wherein the electric machine (6) has a rotor and a stator and the drive apparatus (1) has a drive unit (2) that interacts with the electric machine, wherein an angular position of the rotor with respect to the stator is determined on the basis of a by means of an encoder, in particular rotation angle encoder (4), which is associated with the drive unit (2), wherein the encoder and the electric machine are coupled to the drive unit and wherein a control apparatus (12) serving to actuate the electric machine is provided, said control apparatus being connected to the encoder, **characterized in that**, to start the electric machine (6), the angular position of the rotor with respect to the stator is determined in the control apparatus (12) initially by means of applying at least one current pulse to a winding of the electric machine (6) and subsequently on the basis of the relative angle detected by means of the encoder, in particular rotation angle encoder (4).

2. Method according to Claim 1, **characterized in that** a plurality of current pulses are switched to the electric machine (6) successively so that the current pulses generate stator flux vectors that are offset by angular steps with respect to one another, that, for each switched current pulse, phase currents in two winding phases through which current flows in the same direction are measured and compared with one another and that, from the comparison, a sector of 180° is determined for the angular position, which sector adjoins the phase position of the stator flux vector at larger or smaller angles depending on the winding phase in which the larger or smaller phase current is measured, that, through an intersection of the determined 180°-sectors, the sector for the angular position is restricted to the size of an angular step and that an angular position of the axis of symmetry of the intersection sector is identified as the rotor position.

3. Method according to either of the preceding claims, **characterized in that** the rotation angle encoder (4) detects an absolute angular position for at least one angular position and the angular position of the rotor is corrected using said absolute angular position.

4. Drive apparatus (1) having an electric machine (6), which has a rotor and a stator, and having a drive unit (2) that interacts with the electric machine, wherein an angular position of the rotor with respect to the stator is determined on the basis of a by means of an encoder, in particular rotation angle encoder (4), which is associated with the drive unit (2), wherein the encoder and the electric machine are coupled to the drive unit and wherein a control apparatus (12) serving to actuate the electric machine is provided, said control apparatus being connected to the encoder, **characterized in that**, to start the electric machine (6), the angular position of the rotor with respect to the stator can be determined in the control apparatus (12) initially by means of applying at least one current pulse to a winding of the electric machine (6) and subsequently on the basis of the relative angle detected by means of the encoder, in particular rotation angle encoder (4).

5. Drive apparatus (1) according to Claim 4, **characterized in that** the drive unit (2) is an internal combustion engine (3).

6. Drive apparatus (1) according to either of Claims 4 and 5, **characterized in that** the rotation angle encoder (4) is an encoder wheel.

## Revendications

1. Procédé pour faire fonctionner une machine électrique (6) d'un dispositif d'entraînement (1), dans lequel la machine électrique (6) présente un rotor et un stator et le dispositif d'entraînement (1) présente un mécanisme d'entraînement (2) coopérant avec la machine électrique, dans lequel une position angulaire du rotor par rapport au stator est déterminée à l'aide d'un au moyen d'un capteur associé au mécanisme d'entraînement (2), en particulier un capteur d'angle de rotation (4),
dans lequel le capteur et la machine électrique sont couplés avec le mécanisme d'entraînement et dans lequel on prévoit un dispositif de commande (12) servant à la commande de la machine électrique, lequel est relié au capteur,
**caractérisé en ce que** la position angulaire du rotor par rapport au stator pour le démarrage de la machine électrique (6) est tout d'abord déterminée au moyen d'une application d'au moins une impulsion de courant à un enroulement de la machine électrique (6) et ensuite au moyen de l'angle relatif détecté au moyen du capteur, en particulier du capteur d'angle de rotation (4), dans le dispositif de commande (12).

2. Procédé selon la revendication 1, **caractérisé en ce qu'**une pluralité d'impulsions de courant sont appliquées successivement à la machine électrique (6) de telle sorte que les impulsions de courant génèrent des vecteurs de flux de stator décalés de l'ordre de pas angulaires les uns par rapport aux autres, qu'à chaque impulsion de courant appliquée, des courants de phase dans deux phases d'enroulement parcourues dans le même sens sont mesurés et comparés entre eux, et que l'on détermine à partir de cette comparaison un secteur de 180° pour la position angulaire lequel, en fonction de celle des phases d'enroulement dans laquelle on mesure le courant de phase plus important ou moins important, est en jonction avec la position de phase du vecteur de flux de stator en angles plus grands ou plus petits, que grâce à une intersection des secteurs de 180° déterminés, le secteur pour la position angulaire est limité à la taille d'un pas angulaire et qu'une position angulaire de l'axe de symétrie du secteur d'intersection est déterminée en tant que position du rotor.

3. Procédé selon l'une des revendications précédentes, **caractérisé en ce que** le capteur d'angle de rotation (4) détecte une position angulaire absolue pour au moins une position angulaire et corrige avec celle-ci la position angulaire du rotor.

4. Dispositif d'entraînement (1) avec une machine électrique (6), laquelle présente un rotor et un stator, et avec un mécanisme d'entraînement (2) coopérant avec la machine électrique, dans lequel une position angulaire du rotor par rapport au stator est déterminée à l'aide d'un au moyen d'un capteur associé au mécanisme d'entraînement (2), en particulier un capteur d'angle de rotation (4),
dans lequel le capteur et la machine électrique sont couplés avec le mécanisme d'entraînement et dans lequel on prévoit un dispositif de commande (12) servant à la commande de la machine électrique, lequel est relié au capteur,
**caractérisé en ce que** la position angulaire du rotor par rapport au stator pour le démarrage de la machine électrique (6) peut être tout d'abord déterminée au moyen de l'application d'au moins une impulsion de courant à un enroulement de la machine électrique (6) et ensuite au moyen de l'angle relatif détecté au moyen du capteur, en particulier du capteur d'angle de rotation (4), dans le dispositif de commande (12).

5. Dispositif d'entraînement (1) selon la revendication 4, **caractérisé en ce que** le mécanisme d'entraînement (2) est un moteur à combustion interne (3).

6. Dispositif d'entraînement (1) selon l'une des revendications 4 et 5, **caractérisé en ce que** le capteur d'angle de rotation (4) est une roue de capteur.
